# EUROPÄISCHE PATENTSCHRIFT

(11) **EP 0 691 240 B1**
(45) Veröffentlichungstag und Bekanntmachung des Hinweises auf die Patenterteilung: **10.09.1997**
(21) Anmeldenummer: 95105602.7
(22) Anmeldetag: 13.04.1995
(51) Int. Cl.: B60N 3/08

(54) **Ascher oder dgl. Behältnis, insbesondere für Fahrzeuge**
Ashtray or similar receptacle, particularly for vehicles
Cendrier ou réceptacle similaire, en particulier pour véhicules

(30) Priorität: 23.06.1994 DE 4421666
(43) Veröffentlichungstag der Anmeldung: 10.01.1996
(73) Patentinhaber: BECKER GROUP EUROPE GmbH, 42285 Wuppertal (DE)
(72) Erfinder: Rodewald, Klaus, D-44149 Dortmund (DE); Nowak, Manfred, D-42659 Solingen (DE)

(56) Entgegenhaltungen:
- EP-A- 0 352 434
- DE-A- 3 419 982
- DE-A- 3 842 736
- US-A- 2 548 533

## Beschreibung

Die Erfindung bezieht sich auf einen Ascher od. dgl. Behältnis, insbesondere für Fahrzeuge, mit einem Aufnahmegehäuse und einem von diesem getragenen Einsatz, der nach dem Lösen einer Verriegelung durch die Kraft einer Feder in eine griffgünstige Position anhebbar ist.

Ein Ascher der gattungsgemäßen Art ist in der DE- 34 19 982 C2 gezeigt. Bei solchen Aschern od. dgl. Behältnissen, z.B. Ablagefach oder Münzfach, wird von manchen Automobilherstellern vom Design eine Konstruktion vorgegeben, die eine äußerst enge Toleranz für den Fertigungsprozeß erzwingt. Der Einsatz wird in eine vorgegebene Randkontur des Aufnahmegehäuses eingebracht, so daß, um ein Klemmen der Bauteile und damit eine Funktionsstörung auszuschließen, mit sehr engen Toleranzen sowohl für das umgebende Aufnahmegehäuse als auch für den Einsatz gearbeitet werden muß. Der an sich naheliegende Ausweg, die Passung grundsätzlich mit größerem Spiel an der Fügestelle auszulegen, wird von der Abnehmerschaft wegen der dabei entstehenden Spalte nicht zugestanden. Die geforderten kleinen Spalte führen daher immer wieder zu Toleranzpaarungen, die im Bereich einer Übergangspassung liegen, und sind mit der Konsequenz verbunden, daß der federgetriebene Ausfahrvorgang des Einsatzes nicht betriebssicher arbeitet.

Der Erfindung liegt daher ausgehend von einem Ascher od. dgl. Behältnis der eingangs genannten Art die Aufgabe zugrunde, eine Ausfahrbewegung des Einsatzes auch bei vergleichsweise strammer Einpassung desselben im Aufnahmegehäuse zu gewährleisten.

Zur Lösung dieser Aufgabe ist erfindungsgemäß vorgesehen, daß ein durch eine Betätigungstaste in eine Entriegelungsposition bewegbares Entriegelungselement einen Nocken mit einer Schrägfläche aufweist, die gegen eine damit korrespondierende Schrägfläche eines am Einsatz angeordneten Nockens bewegbar ist, um die zum Anheben des Einsatzes vorgesehene Feder zu unterstützen.

Durch diese erfindungsgemäße Maßnahme ist sichergestellt, daß der Einsatz aus dem Bereich der engen Einpassung zwangsweise herausgedrückt wird, so daß anschließend die normale durch die Feder und ggf. durch eine eingebaute Bremse, die zum Begrenzen der Geschwindigkeit des Einsatzes bei der Bewegung in die griffgünstige Position vorgesehen sein kann, kontrollierte Öffnungsfunktion ablaufen kann.

Gemäß einer bevorzugten Weiterbildung der Erfindung ist vorgesehen, daß das Entriegelungselement als Schieber ausgebildet ist, der einendig über eine federbelastete Wippe mit der Betätigungstaste verbunden ist und mit dem freien Endbereich einen Anschlag des Einsatzes in dessen Gebrauchslage übergreift, und daß die Anordnung der Nocken so getroffen ist, daß die Schrägflächen derselben erst nach Freigabe des Anschlags durch den Schieber aufeinandertreffen. Durch diese Maßnahme kann im Falle eines ausreichenden Spiels mit Leichtgängigkeit an der Passungsstelle die Öffnungsfunktion völlig normal arbeiten, denn die erfindungsgemäße formschlüssige Hilfsvorrichtung kommt gar nicht zum Eingriff, da die Feder den Einsatz gerade schon aus dem Aufnahmegehäuse heraushebt. Bei zu engem Spiel an der Passungsstelle hebt der Schieber zuerst die Verriegelung auf, wonach im weiteren Bewegungsablauf der Einsatz per Formschluß angehoben und aus dem engen Passungsspalt hinausgedrückt wird. Der Benutzer wird bei dieser Anordnung die leicht unterschiedliche Funktion überhaupt nicht bemerken.

Ein Ausführungsbeispiel der Erfindung wird im folgenden anhand der Zeichnung näher erläutert und es zeigen:

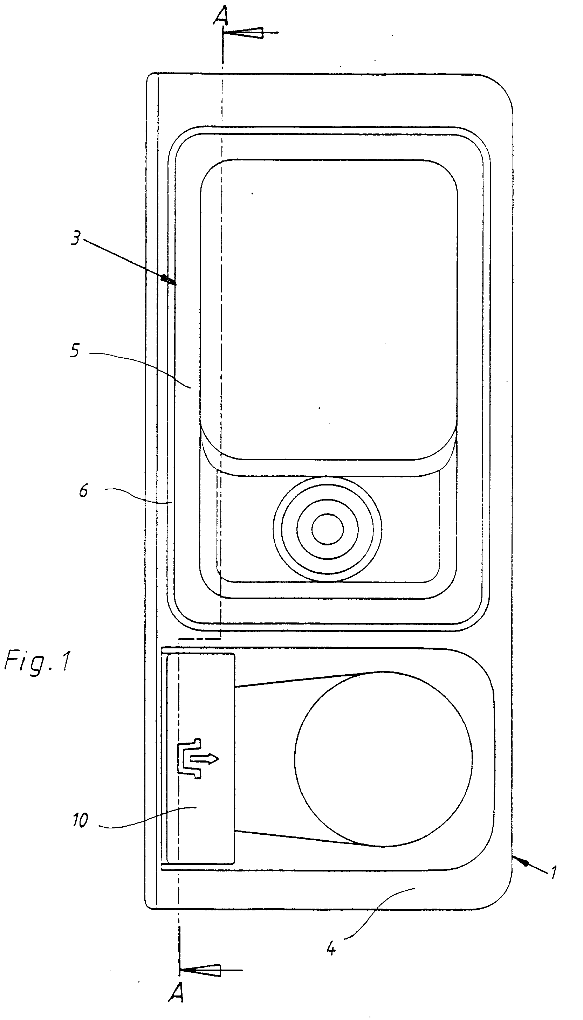

- Fig. 1: einen Ascher für Fahrzeuge in Draufsicht,
- Fig. 2: einen Schnitt folgend der Linie A-A mit sich in der Gebrauchslage befindlichem Einsatz und
- Fig. 3: den Schnitt A-A mit sich in angehobener Position befindlichem Einsatz.

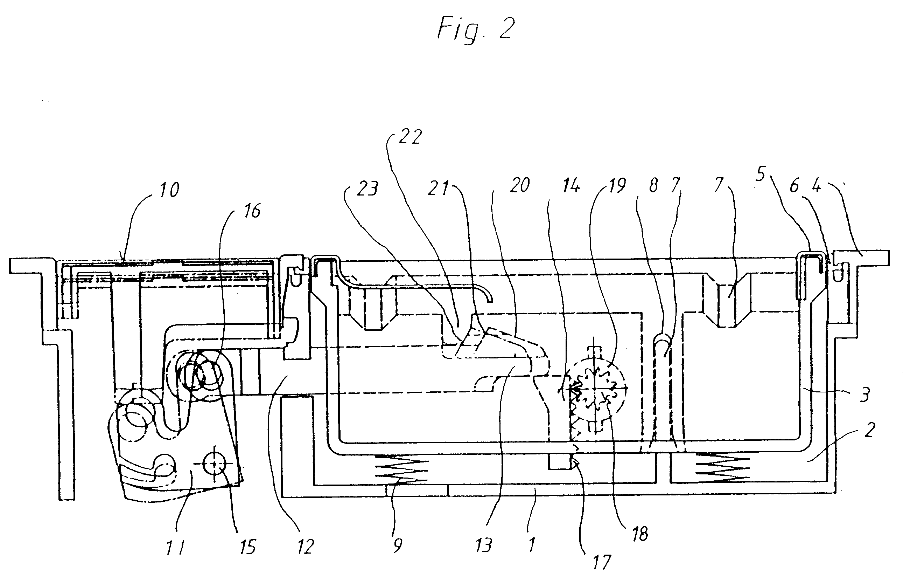

Der Ascher besteht aus einem Aufnahmegehäuse 1 mit einer Aufnahmeöffnung 2 und einem darin eingesetzten Einsatz 3. Das Aufnahmegehäuse 1 weist einen kopfseitigen Umlaufflansch 4 auf, der sich mit dem Umlaufflansch 5 des Einsatzes 3 auf einer Ebene befindet, wenn der Einsatz 3 nach Fig. 2 seine Gebrauchsposition einnimmt. Die Peripherie des Umlaufflanschs 5 grenzt mit äußerst geringem Spiel an einen die Aufnahmeöffnung 2 begrenzenden Kragen 6 an, der ausleuchtbar ist, wobei die dafür im einzelnen vorgesehenen Mittel nicht dargestellt sind. Die engen Toleranzen zwischen der Aufnahmeöffnung 2 und dem Einsatz 3 sind lediglich in den kopfseitigen Bereichen gegeben, weil nur hier eine Spaltbildung zu verhindern ist. In den übrigen Bereichen besteht zwischen der Aufnahmeöffnung 2 und dem Einsatz 3 ein recht großzügiges Spiel. Führungsmittel in Form von ineinandergreifenden Vorsprüngen 7 und Nuten 8 legen den Einsatz 3 im Zusammenwirken mit zumindest einer Feder 9 und einer Verriegelung völlig wackelfrei in der Aufnahmeöffnung 2 des Aufnahmegehäuses 1 fest.

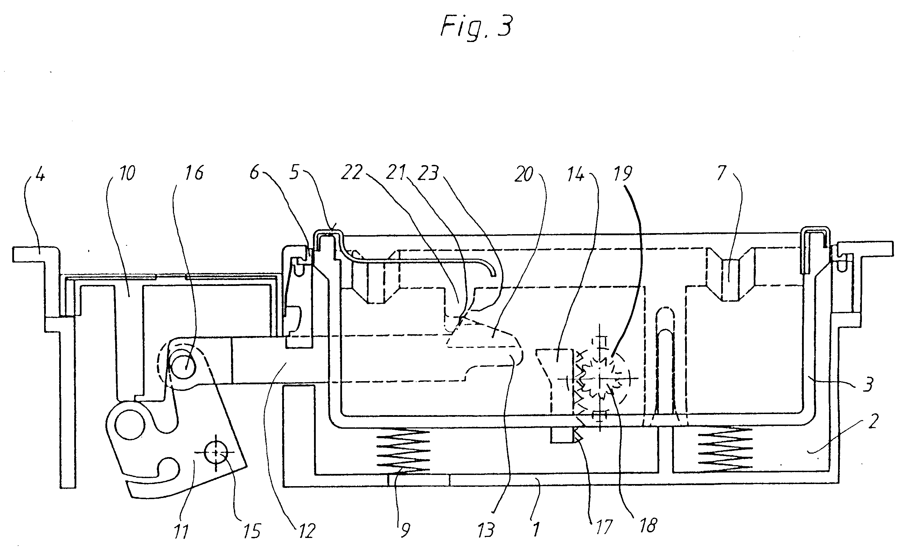

Der Einsatz 3 wird in seiner aus Fig. 2 ersichtlichen Gebrauchslage durch die Verriegelung gegen die Kraft der Feder 9 gehalten. Die Verriegelung umfaßt eine am Aufnahmegehäuse 1 gelagerte Betätigungstaste 10, eine von dieser beaufschlagbare federbelastete Wippe 11 und einen an der Wippe 11 angelenkten Schieber 12 mit einem Rasthaken 13 am freien Endbereich. Der Schieber 12 verläuft in horizontaler Ausrichtung parallel zwischen zwei benachbarten Wandungen des Aufnahmegehäuses 1 und des Einsatzes 3 und übergreift einen Anschlag 14 am Einsatz 3. Durch eine Druckbetätigung der Betätigungstaste 10 schwenkt die Wippe 11 um den Drehpunkt 15 und nimmt den bei 16 angelenkten Schieber 12 unter Freigabe des Anschlags 14 mit. Die Feder(n) 9 hebt nach Freigabe des Anschlags den Einsatz 3 in die aus Fig. 3 ersichtliche Position an, in der der Einsatz ergriffen und dem Aufnahmegehäuse 1 entnommen werden kann. Damit der Bewegungshub für den Einsatz 3 nicht zu abrupt erfolgt, kann der Anschlag 14 eine stegartige Verlängerung mit einer Verzahnung 17 aufweisen, die mit dem Ritzel 18 einer handelsüblichen Fettbremse 19, die am Aufnahmegehäuse 1 sitzt, kämmt.

Bei zu engem Spiel an den erwähnten Passungsstellen sorgt ein Hilfsmittel per Formschluß für ein Anheben des Einsatzes. Vorgesehen hierfür sind ein erster Nocken 20 mit einer Schrägfläche 21 und ein zweiter Nocken 22 mit einer Schrägfläche 23. Der erste Nocken 20 ist am Schieber 12 und der zweite Nocken 22 ist am Einsatz 3 ausgebildet. Bei zu engem Spiel wird also durch die Betätigungstaste 10 zunächst der Anschlag 14 freigegeben, wonach die Schrägflächen 21 und 23 aufeinanderlaufen und den Einsatz 3 per Formschluß anheben und aus dem engen Passungsspalt hinausdrücken.

Für die Erfindung wesentlich ist die Gestaltung des Bewegungsablaufs als Kette von Entriegelung zur Freigabe des kraftschlußgesteuerten Normalhubs mit direkt nachfolgender Formschluß-Aushubfunktion zur zwangsweisen Entformung des Einsatzes 3 aus dem engen Passungsbereich des Aufnahmegehäuses 1. Daher wird auch eine kinematische Variation als Drehschieber mit Schräg- bzw. Spiralfläche und Gegenfläche, sowie eine weitere Variation - Aushub mittels Kniehebelgetriebe - als im Erfindungsbereich liegend beansprucht.

## Patentansprüche

1. Ascher od. dgl. Behältnis, insbesondere für Fahrzeuge, mit einem Aufnahmegehäuse (1) und einem von diesem getragenen Einsatz (3), der nach dem Lösen einer Verriegelung durch die Kraft einer Feder (9) in eine griffgünstige Position anhebbar ist, dadurch gekennzeichnet, daß ein durch eine Betätigungstaste (10) in eine Entriegelungsposition bewegbares Entriegelungselement einen Nocken (20) mit einer Schrägfläche (21) aufweist, die gegen eine damit korrespondierende Schrägfläche (23) eines am Einsatz (3) angeordneten Nockens (22) bewegbar ist, um die zum Anheben des Einsatzes (3) vorgesehene Feder (9) zu unterstützen.

2. Ascher nach Anspruch 1, dadurch gekennzeichnet, daß das Entriegelungselement als Schieber (12) ausgebildet ist, der einendig über eine federbelastete Wippe (11) mit der Betätigungstaste (10) verbunden ist und mit dem freien Endbereich (13) einen Anschlag (14) des Einsatzes (3) in dessen Gebrauchslage übergreift, und daß die Anordnung der Nocken (20, 22) so getroffen ist, daß die Schrägflächen (21, 23) derselben erst nach Freigabe des Anschlags (14) durch den Schieber (12) aufeinandertreffen.

## Claims

1. Ashtray or similar container, in particular for vehicles, having a receiving housing (1) and an insert (3) which is borne by said receiving housing and, after release of a locking mechanism, can be raised into an easy-grip position by the force of the spring (9), characterized in that an unlocking element which can be moved into an unlocking position by an actuating button (10) has a cam (20) with an oblique surface (21) which can be moved against a mutually correspondingly oblique surface (23) of a cam (22) arranged on the insert (3), in order to assist the spring (9) provided for the purpose of raising the insert (3).

2. Ashtray according to Claim 1, characterized in that the unlocking element is designed as a slide (12) which, at one end, is connected to the actuating button (10) via a spring-loaded rocker (11) and, by means of the free end region (13), grips over a stop (14) of the insert (3) in the use position thereof, and in that the arrangement of the cams (20, 22) is such that it is only after the stop (14) has been released by the slide (12) that the oblique surfaces (21, 23) of said cams come into contact with one another.

## Revendications

1. Cendrier ou récipient analogue, en particulier pour véhicules comprenant un boîtier de réception (1) dans lequel est logé un insert (3) qui, lorsqu'on libère un verrouillage, est soulevé par l'action d'un ressort (9) pour venir occuper une position favorisant sa saisie,
caractérisé en ce qu'
un élément qui peut être amené dans une position de déverrouillage par un poussoir de manoeuvre (10), comporte une came (20) à portée oblique (21) pouvant se déplacer au contact d'une portée oblique correspondante (23) d'une came à ergot (22) montée sur l'insert, afin de venir en renfort du ressort (9) prévu pour soulever l'insert (3).

2. Cendrier selon la revendication 1,
caractérisé en ce que
l'élément de déverrouillage est constitué par un coulisseau (12) relié à une extrémité, par une bascule (11) soumise à l'action d'un ressort, au poussoir de manoeuvre (10) tandis que par son autre extrémité libre (3) le coulisseau est en prise avec une butée (14) de l'insert (3) lorsque celui-ci est en position d'utilisation, la disposition des cames (20, 22) étant conçue pour que leurs portées obliques (21, 23), après libération de la butée (14) se rencontrent par l'action du coulisseau (12).
